(19) Europäisches Patentamt
European Patent Office
Office européen des brevets

(11) **EP 1 502 506 B1**

(12) **EUROPÄISCHE PATENTSCHRIFT**

(45) Veröffentlichungstag und Bekanntmachung des Hinweises auf die Patenterteilung:
**09.05.2012 Patentblatt 2012/19**

(51) Int Cl.:
***A01N 31/08*** *(2006.01)*     ***A01N 43/80*** *(2006.01)*

(21) Anmeldenummer: **04026053.1**

(22) Anmeldetag: **12.02.2001**

(54) **Mikrobizide Mittel**

Microbicidal agents

Agents microbicides

(84) Benannte Vertragsstaaten:
**AT BE CH CY DE DK ES FI FR GB GR IE IT LI LU MC NL PT SE TR**

(30) Priorität: **24.02.2000 DE 10008507**

(43) Veröffentlichungstag der Anmeldung:
**02.02.2005 Patentblatt 2005/05**

(62) Dokumentnummer(n) der früheren Anmeldung(en) nach Art. 76 EPÜ:
**01911632.6 / 1 259 110**

(73) Patentinhaber: **LANXESS Deutschland GmbH**
**51369 Leverkusen (DE)**

(72) Erfinder:
• **Wachtler, Peter, Dr.**
**47800 Krefeld (DE)**
• **Kugler, Martin, Dr.**
**42799 Leichlingen (DE)**

(56) Entgegenhaltungen:
**EP-A- 0 147 222     EP-A- 0 233 288**
**EP-A- 0 513 637     EP-A- 0 761 094**
**DE-A- 2 524 543     DE-B- 1 287 259**
**US-A- 3 829 305**

• **DATABASE CA [Online] CHEMICAL ABSTRACTS SERVICE, COLUMBUS, OHIO, US; XP002184133 gefunden im STN-INTERNATIONAL accession no. 126:28030 CA & JP 08 253404 A (KATAYAMA CHEMICAL WORKS) 1. Oktober 1996 (1996-10-01) & DATABASE WPI Week 199649 Derwent Publications Ltd., London, GB; AN 1996-49340**
• **DATABASE CHEMABS [Online] CHEMICAL ABSTRACTS SERVICE, COLUMBUS, OHIO, US; XP002175723 gefunden im STN-INTERNATIONAL accession no. 116:262596 CA & JP 04 051959 A (NIPPON SODA) 20. Februar 1992 (1992-02-20)**
• **DATABASE WPI Section Ch, Week 199128 Derwent Publications Ltd., London, GB; Class A25, AN 1991-204939 XP002184134 & JP 03 130758 A (FUJI PHOTO FILM CO LTD) 4. Juni 1991 (1991-06-04) & PATENT ABSTRACTS OF JAPAN Bd. 15, Nr. 347 (P-1246), 3. September 1991 (1991-09-03) A**
• **DATABASE CHEMABS [Online] CHEMICAL ABSTRACTS SERVICE, COLUMBUS, OHIO, US; XP002175724 gefunden im STN-INTERNATIONAL accession no. 133:152129 CA & JP 2000 226545 A (KONICA) 15. August 2000 (2000-08-15)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 502 506 B1

**Beschreibung**

Gegenstand der vorliegenden Anmeldung sind mikrobizide Mittel mit verbesserter bakterizider Wirksamkeit. Die Erfindung betrifft synergistische Mischungen aus o-Phenylphenol (OPP) mit MIT (2-Methyl-2H-isothiazol-3-on).

o-Phenylphenol (OPP) ist ein bekannter Wirkstoff. Er wird in der industriellen Konservierung sowie in der Desinfektion eingesetzt. Das Wirkungsspektrum von OPP umfasst sowohl gram-positive wie gram-negative Bakterien als auch Pilze und Hefen. Trotz dieser insgesamt guten mikrobiologischen Bandbreite ist die zur Bekämpfung bestimmter Typen von Mikroorganismen (z.B. Bakterien aus der Familie der Pseudomonaden) in der Praxis erforderliche Einsatzkonzentration aus ökonomischer und ökologischer Sicht nicht immer befriedigend. Es besteht daher der Bedarf an breit wirksamen mikrobiziden Mitteln mit einer gleichmäßigeren Wirkung gegen die zu bekämpfenden Mikroorganismen, welche darüber hinaus problemlos in zahlreiche zu schützende Substrate eingearbeitet werden können.

JP-A-08253404 beschreibt Zusammensetzungen die o-Phenylphenol und 5-Chlor-2-methyl-2H-isothiazol-3-on oder Mischungen von 5-Chlor-2-methyl-2H-isothiazol-3-on mit 2-Methyl-2H-isothiazole-3-on enthalten.

Es wurde nun überraschenderweise gefunden, dass Wirkstoffmischungen aus OPP und MIT, insbesondere in spezifischen Mischungsverhältnissen, eine unerwartete hohe synergistische Wirkungssteigerung aufweisen. Daraus folgt, dass die zum Schutz technischer Produkte einzusetzenden Wirkstoffmengen herabgesetzt werden können, was zu einer ökonomischeren Verwendung führt oder einen Beitrag zur Erhöhung der Konservierungsqualität darstellt. Grundsätzlich kann festgestellt werden, dass die erfindungsgemäßen Mischungen eine Verbesserung gegenüber dem Stand der Technik, d.h. der Verwendung der einzelnen Wirkstoffe darstellen. Bevorzugt konserviert werden mit den neuen Wirkstoffmischungen funktionelle Flüssigkeiten und wasserhaltige technische Produkte, die anfällig sind gegen den Befall mit Mikroorganismen.

Die erfindungsgemäßen Wirkstoffmischungen können beispielsweise zum Schutz folgender technischer Produkte eingesetzt werden:

- Stärkelösungen, -dispersionen oder Slurrys oder andere auf Basis von Stärke hergestellte Produkte wie z.B. Druckverdicker
- Slurrys anderer Rohstoffe wie Farbpigmente (z.B. Eisenoxidpigmente, Rußpigmente, Titandioxidpigmente) oder Slurrys von Füllstoffen wie Kaolin oder Calciumcarbonat
- Betonadditive beispielsweise auf Basis von Melasse oder Ligninsulfonaten
- Leime und Klebstoffe auf Basis der bekannten tierischen, pflanzlichen oder synthetischen Rohstoffe
- Bitumenemulsionen
- Detergentien und Reinigungsmittel für den technischen und Haushaltsbedarf
- Mineralöle oder Mineralölprodukte (wie z.B. Dieselkraftstoffe)
- Hilfsmittel für die Leder-, Textil- oder fotochemische Industrie
- Vor- und Zwischenprodukte der chemischen Industrie, z.B. bei der Farbstoffproduktion und -lagerung.
- Tinten oder Tuschen
- Wachs- und Tonemulsionen

Die erfindungsgemäßen Wirkstoffmischungen enthalten MIT (2-Methyl-2Hisothiazol-3-on) als bakteriziden Mischungspartner für OPP.

Das Mischungsverhältnis von o-Phenylphenol (OPP) zu MIT kann über einen weiten Bereich variiert werden, wobei das Optimum beispielsweise von der betreffenden Anwendung abhängt.

In Konservierungsstoffen mit breiter antimikrobieller Wirkung, die zum Schutz funktioneller Flüssigkeiten und wasserhaltiger technischer Produkte dienen, sollte das Gewichtsverhältnis von o-Phenylphenol (OPP) zum Mischungspartner MIT 99,9:0,1 bis 50:50, bevorzugt 99:1 bis 70:30, besonders bevorzugt 80:20 bis 60:40 betragen.

Die erfindungsgemäßen Wirkstoffkombinationen weisen eine starke Wirkung gegen Mikroorganismen auf. Die erfindungsgemäßen Wirkstoffkombinationen werden im Materialschutz zum Schutz technischer Materialien insbesondere zum Schutz von wässrigen funktionellen Flüssigkeiten verwendet; sie sind wirksam gegen Bakterien und Schimmelpilze, sowie gegen Hefen und Schleimorganismen. Beispielhaft, jedoch ohne zu limitieren seien die folgenden Mikroorganismen genannt:

Altemaria wie Alternaria tenuis, Aspergillus wie Aspergillus niger, Chaetomium wie Chaetomium globosum, Fusarium wie Fusarium solani, Lentinus wie Lentinus tigrinus, Penicillium wie Penicillium glaucum;
Alcaligenes wie Alcaligenes faecalis, Bacillus wie Bacillus subtilis, Escherichia wie Escherichia coli, Pseudomonas wie Pseudomonas aeruginosa oder Pseudomonas fluorescens, Staphylococcus wie Staphylococcus aureus;
Candida wie Candida albicans, Geotrichum wie Geotrichum candidum;

Die erfindungsgemäßen Wirkstoffkombinationen können in Abhängigkeit von ihren jeweiligen physikalischen und/oder chemischen Eigenschaften entweder separat in Form der Einzelwirkstoffe zudosiert werden, wobei je nach vorliegendem Konservierungsproblem eine individuelle Einstellung des Konzentrationsverhältnisses vorgenommen werden kann, oder es kann eine Überführung in übliche Formulierungen erfolgen, wie Lösungen, Emulsionen, Suspensionen, Pulver, Schäume, Pasten, Granulate, Aerosole und Feinstverkapselungen in polymeren Stoffen.

Diese Formulierungen werden in an sich bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen infrage: Aromaten, wie Xylol, Toluol, Alkylnaphthaline, chlorierte Aromaten oder chlorierte aliphatische Kohlenwasserstoffe, wie Chlorbenzole, Chlorethylene, oder Methylenchlorid, aliphatische Kohlenwasserstoffe, wie Cyclohexan oder Paraffine, z.B. Erdölfraktionen, Alkohole, wie Butanol oder Glykol sowie deren Ether und Ester, Ketone, wie Aceton, Methylethylketon, Methylisobutylketon oder Cyclohexanon, stark polare Lösungsmittel, wie Dimethylformamid oder Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid; als feste Trägerstoffe kommen infrage: z.B. natürliche Gesteinsmehle, wie Kaoline, Tonerden, Talkum, Kreide, Quartz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen infrage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstängel; als Emulgierund/oder schaumerzeugende Mittel kommen infrage: z.B. nicht ionogene und anionische Emulgatoren, wie Polyoxyethylen-Fettsäureester, Polyoxyethylen-Fettalkohol-Ether, z.B. Alkylarylpolyglykolether, Alkylsulfonate, Alkylsulfate, Arylsulfonate sowie Eiweißhydrolysate; als Dispergiermittel kommen infrage: z.B. Ligninsulfitablaugen und Methylcellulose.

Es können in den Formulierungen Haftmittel wie Carboxymethylcellulose, natürliche und synthetische, pulverige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Die zum Schutz der technischen Materialien verwendeten mikrobiziden Mittel oder Konzentrate enthalten die Wirkstoffkombination in einer Konzentration von 0,1 bis 95 Gew.-%, insbesondere 5 bis 50 Gew.-%.

Die Anwendungskonzentrationen der erfindungsgemäß zu verwendenden Wirkstoffkombinationen richten sich nach der Art und dem Vorkommen der zu bekämpfenden Mikroorganismen sowie nach der Zusammensetzung des zu schützenden Materials. Die optimale Einsatzmenge kann durch Testreihen ermittelt werden. Im allgemeinen liegen die Anwendungskonzentrationen im Bereich von 0,01 bis 5 Gew.-%, vorzugsweise von 0,05 bis 2,0 Gew.-%, bezogen auf das zu schützende Material.

Die erfindungsgemäße Wirkstoffkombination zeigt synergistische Effekte, d.h. die Wirksamkeit der Mischung ist größer als die Wirksamkeit der Einzelkomponenten.

Der gefundene Synergismus der in der vorliegenden Anmeldung beanspruchten Wirkstoffmischungen bestehend aus o-Phenylphenol (OPP) und MIT lässt sich über folgenden mathematischen Ansatz ermitteln (s. F.C. Kull, P.C. Elisman, H.D. Sylwestrowicz and P.K. Mayer, Appl. Microbiol. 9, 538 (1961):

$$\text{synergistischer Index (SI)} = \frac{Q_a}{Q_A} + \frac{Q_b}{Q_B}$$

mit

$Q_a$ =   Menge Komponente A in der Wirkstoffmischung, die den gewünschten Effekt, d.h. kein mikrobielles Wachstum, erzielt.

$Q_A$ =   Menge Komponente A, die, allein eingesetzt, das Wachstum der Mikroorganismen unterdrückt.

$Q_b$ =   Menge Komponente B in der Wirkstoffmischung, die das Wachstum der Mikroorganismen unterdrückt.

$Q_b$ = Menge Komponente B, die, allein eingesetzt, das Wachstum der Mikroorganismen unterdrückt.

Ein synergistischer Index von <1 zeigt für die Wirkstoffmischung einen synergistischen Effekt an.

Beispielhaft, ohne zu limitieren, wird anhand der nachfolgenden Beispiele die synergistische Wirkungsverstärkung dokumentiert.

### Beispiel 1

Mischung OPP/ MIT (2-Methyl-2H-isothiazolin-3-on)

Bestimmung der minimalen Hemmkonzentration (MHK) von erfindungsgemäßen Mitteln gegen Pseudomonas fluerescens

| Wirkstoff bzw. Wirkstoffmischung (Gewichtsverhältnisse) | MHK-Wert gegen Pseudomonas fluorescens [in mg/L] | SI |
|---|---|---|
| OPP (100 % Wirkstoff) | 500 | |
| MIT (100 % Wirkstoff) | 30 | |
| OPP/ MIT (9:1) | 100 | 0,51 |
| OPP/ MIT (4:1) | 50 | 0,41 |
| OPP/ MIT (2,3:1) | 35 | 0,38 |
| OPP/ MIT (1,5:1) | 20 | 0,29 |

Die erfindungsgemäßen Kombinationen weisen eine ausgeprägte synergistische Wirkung auf.

### Patentansprüche

1. Formulierung bestehend aus o-Phenylphenol und 2-Methyl-2H-isothiazol-3-on sowie gegebenenfalls Streckmitteln und gegebenenfalls oberflächenaktiven Mitteln.

2. Verwendung der Formulierung gemäß Anspruch 1 zum Schutz von technischen Materialien vor Befall durch Pilze und Algen.

3. Verfahren zum Schutz von technischen Materialien vor Befall durch Pilze und Algen, **dadurch gekennzeichnet, dass** man die technischen Materialien mit der Formulierung gemäß Anspruch 1 versetzt oder behandelt.

### Claims

1. Formulation consisting of o-phenylphenol and 2-methyl-2H-isothiazol-3-one and, if appropriate, extenders and, if appropriate, surfactants.

2. Use of the formulation according to Claim 1 for protecting industrial materials against attack by fungi and algae.

3. Method for protecting industrial materials against attack by fungi and algae, **characterized in that** the industrial materials are admixed or treated with the formulation according to Claim 1.

### Revendications

1. Formulation se composant de l'o-phénylphénol et du 2-méthyle-2H-isothiazol-3-one et éventuellement des diluants et éventuellement des tensioactifs.

2. Utilisation de la formulation selon la revendication 1 pour la protection de matières industrielles contre une attaque par des champignons et des algues.

3. Procédé de protection de matières industrielles contre une attaque par des champignons et des algues, **caractérisé en ce que** les matières industrielles sont mélangées ou traitées avec la formulation selon la revendication 1.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 08253404 A